## Europäisches Patentamt
## European Patent Office
## Office européen des brevets

(19)

(11) Numéro de publication: **0 165 118**
**B1**

(12)

# FASCICULE DE BREVET EUROPÉEN

(45) Date de publication du fascicule du brevet:
**10.08.88**

(51) Int. Cl.⁴: **B 29 C 35/08**

(21) Numéro de dépôt: **85400896.8**

(22) Date de dépôt: **07.05.85**

(54) **Procédé et dispositif de polymérisation et/ou de réticulation d'une résine entrant dans la composition d'une pièce en matériau composite au moyen de rayonnements ionisants.**

(30) Priorité: **11.05.84 FR 8407333**

(43) Date de publication de la demande:
**18.12.85 Bulletin 85/51**

(45) Mention de la délivrance du brevet:
**10.08.88 Bulletin 88/32**

(84) Etats contractants désignés:
**BE CH DE GB IT LI**

(56) Documents cité:
**FR-A-2 217 140**
**GB-A-893 989**
**GB-A-1 455 264**
**US-A-2 863 812**
**US-A-3 144 398**

(73) Titulaire: **SOCIETE NATIONALE INDUSTRIELLE AEROSPATIALE Société dite:, 37 Boulevard de Montmorency, F-75781 Paris Cedex 16 (FR)**

(72) Inventeur: **Beziers, Daniel, 19, Allée des Escarrets, F-33160 Saint Medard en Jalles (FR)**

(74) Mandataire: **Mongrédien, André, c/o BREVATOME 25, rue de Ponthieu, F-75008 Paris (FR)**

## Description

La présente invention a pour objet un procédé et un dispositif de polymérisation et/ou de réticulation d'une résine entrant dans la composition d'une pièce en un matériau composite au moyen de rayonnements ionisants. Elle permet, de façon industrielle, de polymériser et/ou de réticuler les résines entrant dans la composition de pièces épaisses ou massives, c'est-à-dire des pièces dont la masse surfacique peut être localement ou entièrement supérieure à 4 g/cm$^2$.

Ces pièces en matériau composite sont de deux types, les pièces de structure simple et les pièces de structure complexe. Les premières sont constituées d'éléments tels que des fibres, des grains, des poudres, liés entre eux par des résines durcissables, ces éléments étant répartis régulièrement dans l'espace. Les secondes sont réalisées comme précédemment avec en plus des objets ou inserts par exemple métalliques ou encore radiodurcissables tels que le caoutchouc, inclus entièrement ou partiellement dans la résine.

Ces pièces de structure simple ou complexe sont notamment utilisées dans les domaines de l'automobile, l'aéronautique, le spatial, etc...

Les procédés de durcissement conduisant à la polymérisation et/ou réticulation des résines, comprennent une première famille de procédés dits "classiques" incluant d'une part ceux utilisant des systèmes de résine à froid, c'est-à-dire, polymérisant à l'air libre sans apport de chaleur et d'autre part, les procédés utilisant un système de résine dont la polymérisation est obtenue par élévation de température en étuve. Ces procédés seront respectivement désignés "classiques à froid" et "classiques à chaud".

Les procédés "classiques à froid" présentent des difficultés de mise en oeuvre et donnent des matériaux de très faible tenue thermique.

Les procédé "classiques à chaud" donnet des matériaux plus performants, mais présentent des défauts dus aux effets thermiques tels que contraintes internes, criques, délaminages dans le cas de pièces épaisses et de plus, les temps de polymérisation entraînent de longs cycles de fabrication ayant de lourdes conséquences financières au plan investissement et consommation d'énergie.

Une deuxième famille de procédés dits "par rayonnement" comprend également des procédés sans élévation de température et des procédés avec élévation de température. Ces derniers comprennent les micro-ondes, la haute fréquence, les infrarouges et comportent, les inconvénients des procédés "classiques à chaud".

Les procédés par rayonnement tels que X, Y, UV et électrons permettent une polymérisation et/ou réticulation sans élévation de température; ce sont des rayonnements ionisants.

Les rayonnements ultraviolets d'énergie relativement faible permettent une pénétration faible dans les matériaux composites. Les rayonnements gammas présentent l'inconvénient de ne pas être focalisés, ce qui entraîne une polymérisation et/ou une réticulation très lente. Par ailleurs, l'utilisation de ces rayonnements est peu envisageable étant donné qu'ils proviennent de sources radioactives permanentes et donc peu transposables industriellement.

Les rayonnements X, obtenus à partir des générateurs X existants, sont peu adaptés à la polymérisation et/ou réticulation de pièces épaisses par manque de puissance, et donc d'un faible débit de dose, et par un dimensionnement trop faible du faisceau.

Le rayonnement ou bombardement électronique est quant à lui un procédé très performant. Il permet en particulier d'obtenir des matériaux composites de très bonne qualité en un temps relativement court et en utilisant des énergies relativement faibles. Par ailleurs, il est compatible avec tous les types de fibres entrant dans la composition des matériaux composites.

Toutefois, la pénétration des électrons dans le matériau composite dépend des caractéristiques du générateur en énergie, de la densité du matériau, et à un degré moindre du coefficient d'absorption de celui-ci. La pénétration dans les pièces par un rayonnement électronique est de 0,35 à 0,45 g/cm par MeV et est donc équivalente à la pénétration dans un matériau comportant une masse surfacique variant de 3,5 à 4,5 g/cm$^2$ pour un générateur ayant une énergie de 10 MeV; la valeur de la masse surfacique dépend des variations des coefficients d'absorption des matériaux composant la structure.

Le document FR-A-2 217 140 décrit un procédé industriel de moulage d'objets en matière plastique renforcée par des fibres, comportant une étape d'irradiation X de la matière plastique à des doses allant jusqu'à 10 Mrad en vue de la durcir.

Le document GB-A-1 455 264 décrit la réticulation de résine constituant des articles par des rayons X obtenus par conversion d'un faisceau d'électrons, à l'aide d'un matériau métallique.

En plus des inconvénients des procédés par rayonnement avec élévation de température, l'emploi des infrarouges ne permet qu'une faible pénétration dans le matériau composite, pénétration au plus égale au millimètre, et l'emploi de certaines fibres, comme le carbone dans le cas du procédé par micro-ondes (UHF), limite de la pénétration.

Pour ce qui concerne les UHF, l'emploi de ces rayonnements est encore au stade d'études et par conséquent te développement industriel est pratiquement inexistant notamment pour la réalisation de pièces à structure complexe. De même l'emploi des HF pour les pièces complexes pose des problèmes importants de mise en oeuvre et ne sont utilisables en général que pour des pièces de forme simple, telle que parallélépipédique ou cylindrique.

La présente invention a justement pour objet un procédé de polymérisation et/ou de réticulation à froid d'une résine entrant dans la composition d'une pièce en matériau composite permettant de s'affranchir des inconvénients inhérents aux techniques actuelles, citées ci-dessus. Elle permet, en particulier de polymériser et/ou réticuler des résines entrant dans la composition de pièces épaisses ou massives en matériau composite, avec un faible prix de revient, ces pièces présentant des caractéristiques de tenue en température au moins équivalentes à celles obtenues par les procédés actuellement utilisés.

Le procédé de l'invention est un procédé industriel de polymérisation et/ou de réticulation d'une résine radiodurcissable, c'est-à-dire durcissable par un rayonnement ionisant, entrant dans la composition d'une pièce simple ou complexe en matériau composite comprenant au moins un insert de nature différente de la résine, de masse surfacique variable. Il se caractérise en ce que l'on envoie un faisceau d'électrons vers la pièce à traiter afin de soumettre la résine dans les zones de la pièce présentant une masse surfacique au plus égale à 4 g/cm$^2$ a ce faisceau d'électrons pour polymériser et/ou réticuler la résine et en ce que l'on interpose entre la pièce et le faisceau d'électrons une cible afin de soumettre la résine dans les zones de la pièce présentant une masse surfacique supérieure à 4 g/cm$^2$ à l'action d'un rayonnement X à des doses allant jusqu'à 10 Mrad suffisantes pour polymériser et/ou réticuler la résine, cette cible étant apte à engendrer, sous l'action du faisceau d'électrons, le rayonnement X.

Lorsque l'insert est un produit radiodurcissable, on utilise des doses de rayonnement X supérieurs à 10 Mrad pour réticuler ledit produit radiodurcissable.

Si certains ont utilisé des appareils conventionnels de production de rayons X pour la polymérisation et/ou réticulation de résines, c'est uniquement à titre expérimental. Par ailleurs, ces appareils ne permettent pas de fournir des débits de doses et des doses aussi importante que ceux utilisés dans l'invention.

Le procédé de l'invention qui permet notamment de traiter des pièces en matériau composite de forte épaisseur, c'est-à-dire dont la masse surfacique est localement ou entièrement supérieure à 4 g/cm$^2$, est compatible avec tous les types de fibres entrant dans la réalisation des matériaux composites. Par ailleurs, les matériaux composites obtenus sont de très bonne qualité, notamment parce que la polymérisation et/ou la réticulation des résines les constituant s'effectuent sans échauffement. Enfin, ce procédé est beaucoup plus rapide que les procédés de l'art antérieur.

Le procédé de l'invention, bien adapté pour la réalisation de pièces épaisses ou massives, peut être avantageusement utilisé dans le cas de pièces présentant une épaisseur variable.

Selon un mode préféré de mise en oeuvre du procédé de l'invention, le faisceau d'électrons présente une énergie au moins égale à 10 MeV et une puissance au moins égale à 10 kW.

Le procédé de polymérisation et/ou de réticulation de l'invention peut être avantageusement utilisé pour polymériser et/ou réticuler des résines comprenant une insaturation éthylénique. Ces résines sont par exemple des résines époxy, des polyesters ou des polyuréthanes à terminaisons acryliques.

Ces résines étaient jusqu'alors utilisées en couches minces de surface sous forme d'encre ou de vernis, pour la protection, la décoration, l'impression, etc.. et non pas pour la fabrication de matériaux composites constituant notamment des pièces dites épaisses.

Selon un mode préféré de mise en oeuvre du procédé de l'invention, on réalise un mouvement relatif entre la pièce et le rayonnement ionisant afin de soumettre tout ou partie de la pièce audit rayonnement.

La présente invention a aussi pour objet un dispositif permettant de mettre en oeuvre le procédé décrit précédemment. Ce dispositif se caractérise en ce qu'il comprend:
- des moyens pour produire un faisceau d'électrons,
- des moyens pour diriger le faisceau d'électrons vers la pièce,
- une cible apte à engendrer, sous l'action du faisceau d'électrons, un rayonnement X permettant d'obtenir des doses allant jusqu'à 10 Mrad, suffisantes pour polymériser et/ou réticuler la résine,
- des moyens automatisés pour placer la cible entre la pièce et le faisceau d'électrons de façon que les zones de la pièce présentant une masse surfacique au plus égale à 4 g/cm$^2$ soient soumises à l'action du faisceau d'électrons et que les zones de la pièce présentant une masse surfacique supérieure à 4 g/cm$^2$ soient soumises à l'action du rayonnement X,
- des moyens pour effectuer un mouvement relatif entre le rayonnement électronique ou X et la pièce afin que celle-ci soit soumise en partie ou en totalité à l'action de l'un desdits rayonnements, et éventuellement.

Les royens automatisés permettent l'automatisation, l'asservissement et le contrôle de l'ensemble du dispositif.

Les moyens pour effectuer le mouvement relatif entre l'un desdits rayonnements ionisants et la pièce sont, de façon avantageuse, des moyens permettant de faire défiler la pièce devant ledit rayonnement à une vitesse telle que la résine constituant cette pièce reçoive la dose nécessaire de rayonnement pour sa polymérisation et/ou réticulation.

Selon un mode préféré de réalisation du dispositif de l'invention, les moyens automatisés comportent un support escamotable permettant de placer ladite cible en regard ou hors du faisceau d'électrons.

Selon un autre mode préféré de réalisation du dispositif de l'invention, celui-ci comprend des moyens permettant de modifier la distance séparant la pièce à traiter de la cible.

Selon un autre mode préféré de réalisation de l'invention, le dispositif comprend, avantageusement, des moyens permettant d'asservir les moyens escamotables de façon que les zones de la pièce, présentant une masse surfacique au plus égale à 4 g/cm², soient soumises à l'action du faisceau d'électrons et que les zones de la pièce présentant une masse surfacique supérieure à 4 g/cm², soient soumises à l'action du rayonnement X.

Ces moyens d'asservissement comprennent notamment un calculateur dans lequel est mis en mémoire l'évolution de la masse surfacique de la pièce.

D'autres caractéristiques et avantages de l'invention ressortiront mieux de la description qui va suivre, donnée à titre illustratif et non limitatif, en référence aux figures annexées, dans lesquelles:
- la figure 1 représente schématiquement, en coupe longitudinale, le dispositif de l'invention, et
- la figure 2 représente des courbes donnant la dose relative D de rayonnement en fonction de la masse surfacique e de la pièce à traiter; la courbe a concerne un rayonnement électronique et la courbe b un rayonnement X.

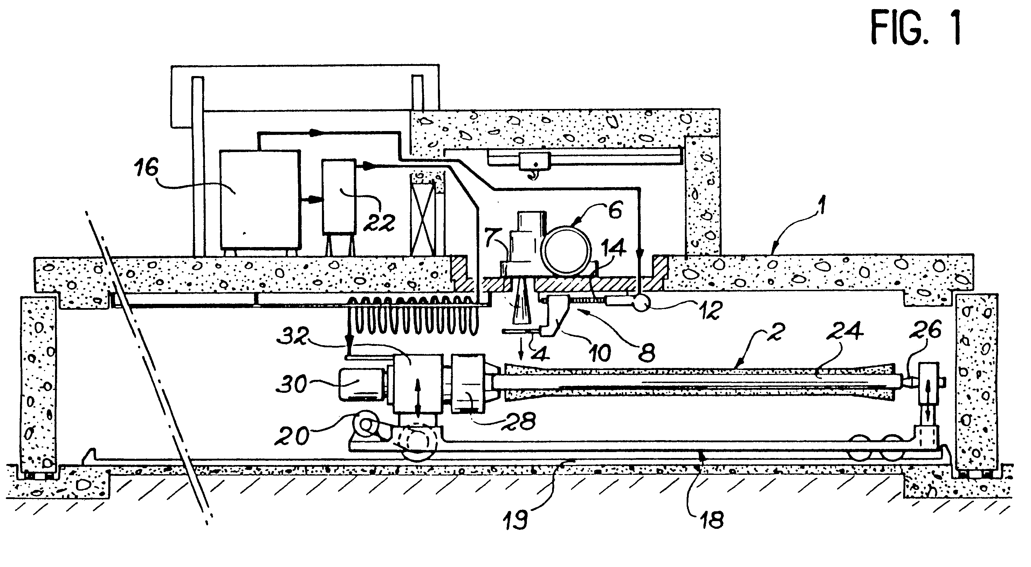

En se référant à la figure 1, le procédé de l'invention consiste à polymériser ou plus exactement à réticuler, dans une enceinte étanche 1, des résines radiodurcissables entrant dans la composition d'une pièce 2 en matériau composite en soumettant lesdites résines à l'action d'un rayonnement X ou électronique suivant la spécificité de la pièce 2.

Le rayonnement X est obtenu avantageusement en bombardant une cible 4, dite de conversion, à l'aide d'un faisceau d'électrons engendré par un générateur d'électrons 6, par exemple du type Cassitron de chez CGR, comportant un élément 7, permettant de diriger le faisceau d'électrons engendré par le générateur vers la cible 4.

Compte tenu du rendement généralement faible des cibles 4 de conversion (inférieure à 10 %) il est préférable d'utiliser un générateur d'électrons 6 de forte énergie et de forte puissance, c'est-à-dire un générateur fournissant une énergie au moins égale à 10 MeV et une puissance au moins égale à 10 kW.

Les cibles de conversion 4 peuvent être constituées par un matériau métallique présentant un numéro atomique élevé, c'est-à-dire supérieur à 74. On peut par exemple utiliser le tungstène, le plomb, l'uranium.

Les dimensions de la cible étant définies par les dimensions de l'élément 7, les nécessités technologiques de mise en oeuvre et le rendement pour connaître le débit de dose du rayonnement X engendré par telle ou telle cible et donc le temps d'exposition, il est nécessaire d'effectuer au préalable un étalonnage, par exemple au moyen d'un film dosimétrique, afin de déterminer le rendement de la conversion des électrons en rayons X, la répartition spatiale des rayons X sous la cible, la définition spectrale desdits rayons, la distribution de la dose dans la résine à polymériser et/ou réticuler et la dose nécessaire pour polymériser et/ou réticuler ladite résine.

Les doses nécessaires à la polymérisation et/ou la réticulation des résines constituant la pièce à traiter 2 varient de 2 à 10 Mrad. Ces doses dépendent du temps d'irradiation et de la puissance du rayonnement X donc de celle du faisceau d'électrons mais aussi du type de résine utilisé. Les résines constituant telle ou telle pièce sont choisies en fonction de leur application, c'est-à-dire en fonction de leurs propriétés mécaniques et/ou thermiques.

Pour une structure donnée, on choisit tel ou tel type de résine, suivant les fibres et les contraintes, d'où la nécessité de faire varier la dose nécessaire, nécessité qui peut s'exprimer aussi par le besoin de polymériser des joints de colle, par exemple, de matières différentes des résines choisies.

Les résines utilisables dans le procédé de l'invention sont des résines à insaturation éthylénique telles que par exemple des résines époxy, des polyesters, ou des polyuréthanes à terminaison acrylique. Ces résines peuvent être aménagées par l'adjonction de composants tels que des solvants ou des assouplissants afin de leur conférer des propriétés particulières pour se polymériser et/ou se réticuler sous irradiation et/ou modifier leurs caractéristiques mécaniques.

Les résines radiodurcissables utilisables dans l'invention polymérisent ou réticulent sans agent de durcissement (type durcisseur, catalyseur ou photo-initiateur), agent généralement nécessaire pour polymériser et/ou réticuler une résine par voie thermique, ou tout autre procédé.

Sous l'effet des rayons X, des liaisons chimiques sont cassées, créant des radicaux libres dont la recombinaison rapide conduit à la création de nouvelles liaisons chimiques menant à la formation d'un réseau macro-moléculaire tridimensionnel (réticulation).

L'emploi d'un rayonnement X à fort débit de dose permet de polymériser et/ou réticuler des résines radiodurcissables entrant dans la composition d'un matériau composite constituant une pièce épaisse, c'est-à-dire une pièce ayant localement ou entièrement une masse surfacique supérieure à 4 g/cm². La masse surfacique d'une pièce est le produit de la densité du matériau la constituant par les épaisseurs dudit matériau.

Le procédé de l'invention s'applique à toutes pièces composées d'un renfort (fibres, tissus, feutres en verre, Kevlar, carbone et autres matériaux), d'une résine radiodurcissable et de pièces d'assemblage et/ou d'inserts notamment métalliques ou autres types de matériaux tels que le caoutchouc. Ces pièces de structure simple ou complexe peuvent présenter n'importe quelle forme. Cependant, le procédé de l'invention s'applique particulièrement bien aux pièces de révolution, comme représenté sur la figure 1.

Selon l'invention, on peut polymériser et/ou réticuler des résines radiodurcissables entrant dans la composition d'une pièce présentant une masse surfacique variable et en particulier une épaisseur variable. Pour les zones de la pièce présentant une épaisseur importante, c'est-à-dire correspondant à une masse surfacique supérieure à 4 g/cm², la polymérisation et/ou la réticulation de la résine, dans ces zones, se fait à l'aide d'un rayonnement X à fort débit de dose, issu notamment de la cible de conversion 4. En revanche, pour les zones de la pièce présentant une faible épaisseur, c'est-à-dire une épaisseur correspondant à une masse surfacique au plus égale à 4 g/cm², la polymérisation et/ou réticulation de la résine dans ces zones est réalisée par un bombardement électronique.

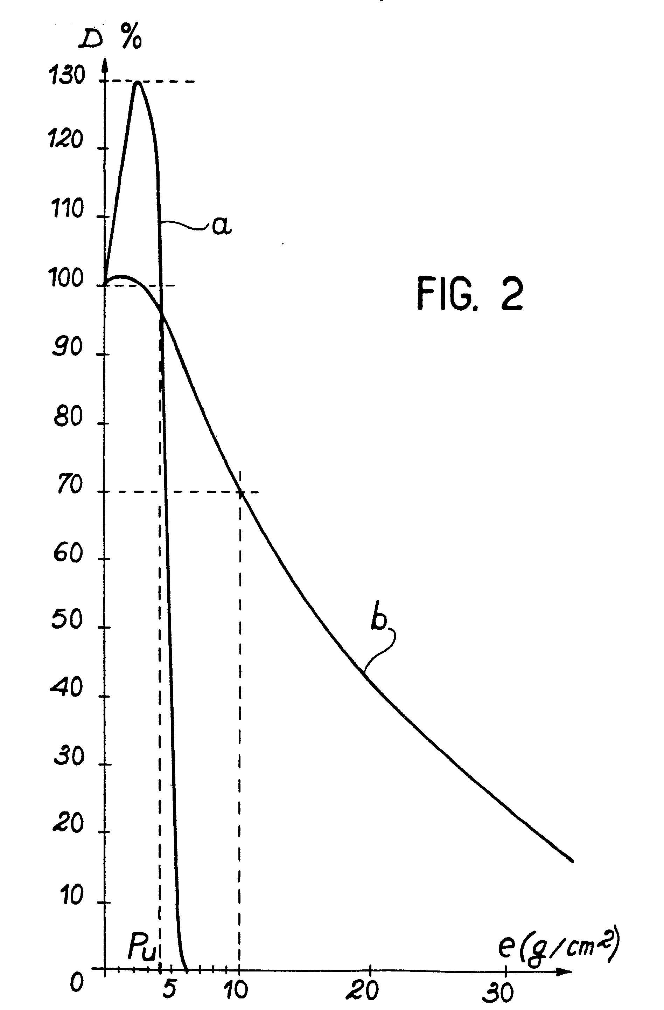

La notion de masse surfacique est importante car sa va leur impose le choix du type d'irradiation X ou électronique à utiliser. En effet, la pénétration des électrons dans la résine de la pièce à traiter est limitée à une masse surfacique de 4 g/cm² pour un générateur d'électrons présentant une énergie de 10 MeV. Cette pénétration, comme représenté sur la courbe $\underline{a}$ de la figure 2, donnant la dose D en % en fonction de la masse surfacique $\underline{e}$ en g/cm², est la pénétration utile Pu et elle correspond à une profondeur dans la résine de la pièce à traiter où l'on a 100 % de la dose d'irradiation. En conséquence, pour une masse surfacique supérieure à 4 g/cm², on utilisera le rayonnement X.

Avec le rayonnement X, les pénétrations sont nettement plus importantes, dans un rapport de l'ordre de 1 à 6, comme représenté à la figure 2. Cependant, il est nécessaire de surdoser la surface de la résine si l'on désire obtenir la dose suffisante d'irradiation à une profondeur donnée. Par exemple, comme le montre la courbe $\underline{b}$, pour une masse surfacique $\underline{e}$ de 10 g/cm², on n'a que 70 % de la dose.

Afin de pouvoir soumettre les zones de faible épaisseur de la pièce 2 à traiter, c'est-à-dire de masse surfacique au plus égale à 4 g/cm², à l'action d'un faisceau d'électrons qui est, selon l'invention, engendré par le générateur 6, la cible de conversion 4 doit pouvoir être placée hors dudit faisceau d'électrons.

Pour ce faire, la cible 4 peut être supportée par des moyens mécaniques 8 escamotables. Ces moyens peuvent par exemple être constitués, comme représenté sur la figure 1, par un support mobile 10 dont le déplacement est commandé par un moteur de translation 12 par l'intermédiaire d'un système visécrou 14.

Ce système mécanique 8 permet le retrait de la cible 4 hors du faisceau d'électrons engendré par le générateur 6, lorsque l'on désire soumettre la pièce 2 à traiter à l'action des électrons, mais il permet, aussi, d'interposer la cible de conversion 4 entre le faisceau d'électrons et la pièce 2, lorsque l'on désire soumettre celle-ci à l'action du rayonnement X.

Le passage d'un type d'irradiation à l'autre se fait instantanément par retrait ou interposition de la cible 4 entre le faisceau d'électrons et la pièce. De plus, selon l'invention, le passage se fait automatiquement en fonction de l'évolution de l'épaisseur de la pièce à traiter, c'est-à-dire suivant l'évolution de la masse surfacique de ladite pièce.

Pour ce faire, le déplacement du support 10 de la cible peut être commandé par un calculateur ou micro-ordinateur 16 tel que le micro-ordinateur connu sous la référence SBC de chez Intel.

Le traitement d'une pièce complète, c'est-à-dire la polymérisation et/ou réticulation de toute la résine entrant dans la composition de la pièce s'effectue en réalisant un mouvement relatif entre la pièce et le rayonnement X ou électronique et par exemple en faisant défiler ladite pièce devant la cible 4 ou le faisceau d'électrons issu du générateur 6. Le défilement de la pièce à traiter est réalisé à une vitesse régulée et asservie permettant l'obtention de la dose d'irradiation nécessaire pour la polymérisation et/ou réticulation de ta résine constituant la pièce.

Lorsque la dose d'irradiation nécessaire n'est pas obtenue par un seul passage de la pièce devant le rayonnement ionisant (X ou $\underline{e}$), celle-ci peut effectuer plusieurs passages, jusqu' à l'obtention de la dose nécessaire d'irradiation.

Dans le cas d'une irradiation X ou e, la vitesse de défilement est fonction des débits de dose, des doses désirées pour la polymérisation et/ou réticulation, de la distance entre la pièce 2 et la cible 4 ainsi que de l'épaisseur de la pièce. Cette vitesse de défilement est régie par l'équation V $= K_v/D$ dans laquelle V est la vitesse de défilement en cm/min, $K_v$ un coefficient déterminé expérimentalement tenant compte pour les X du rendement de conversion de la cible, donc du débit de dose, de la répartition spatiale des rayons X et de la distance de la pièce à la cible, et pour les $\underline{e}$ du débit de dose du générateur.

Le maintien en place de la pièce à traiter ainsi que son déplacement sont assurés à l'aide d'un dispositif mécanique motorisé de type classique. Ce système comprend par exemple un bâti mobile 18 monté sur des rails 19 solidaires de l'enceinte 1. Le déplacement en translation du bâti 18 est assuré par un moteur de translation 20 dont la vitesse de rotation est commandée, par l'intermédiaire d'un module de commande numérique 22, par le micro-ordinateur 16. Ce module de commande 22 est par exemple un microprocesseur tel que celui connu sous la référence 8085 de chez Intel. La pièce 2 est montée sur un axe support 24, ayant une direction perpendiculaire au rayonnement, fixé entre une contrepointe 26 et un mandrin 28 portés par le bâti 18.

Afin de soumettre la résine de la pièce 2 entièrement à l'action des rayonnements X ou électroniques, la pièce 2 peut être entraînée en rotation par l'intermédiaire du mandrin 28

commandé par un moteur do.t la vitesse de rotation est commandée par le micro-ordinateur 16, par l'intermédiaire du module de commande numérique 22.

La dose nécessaire à l'irradiation de la résine constituant la pièce 2 étant fonction, dans le cas du rayonnement X de la distance entre la cible 4 et la pièce 2, des moyens sont prévus pour modifier cette distance, c'est-à-dire pour déplacer l'axe de rotation de la pièce pour rapprocher ou éloigner ladite pièce de la cible suivant la dose d'irradiation que l'on désire obtenir. Dans le mode de réalisation représenté sur la figure 1, ces moyens sont constitués par un moteur de translation 32. Comme précédemment, la mise en rotation de ce moteur 32 est assurée par le micro-ordinateur 16, par l'intermédiaire du module de commande 22.

Il est à noter que le réglage de la distance séparant la pièce 2 et la cible 4 pourrait être obtenu en maintenant la pièce fixe et en déplaçant la cible tout en modifiant la concentration du faisceau pour assurer le même débit de dose.

Le microordinateur 16 et le module de commande numérique 22 permettent d'assurer l'automatisme intégral du dispositif mécanique pour la mise en translation et en rotation aux vitesses déterminées de la pièce à traiter ainsi que l'interposition à distance et temps voulus de la cible entre la pièce et le faisceau d'électrons ou le retrait de celle-ci.

En effet, à partir de certains paramètres ou données, qui seront explicités ultérieurement, mis en mémoires dans le micro-ordinateur 16, celui-ci peut déterminer:

- le type d'irradiation (X ou électrons) à employer, commander les mouvements de la cible (interposition ou retrait),

- réguler la vitesse de défilement de la pièce à traiter en fonction de la dose d'irradiation, pour une irradiation électronique,

- calculer, pour une irradiation par rayons X, les doses de surface, le nombre de passages et/ou la vitesse de passage de la pièce en fonction du profil de celle-ci et de la dose de surface,

- dans le cas de pièces de révolution, réguler la vitesse de rotation de la pièce en fonction de l'évolution de son diamètre de façon que les points de la pièce sur une même circonférence, passent à la même vitesse sous le rayonnement ionisant (X ou électrons) et, éventuellement,

- commander les mouvements de la cible ou de la pièce afin que la distance les séparant soit la plus petite possible, ce qui permet une optimisation des débits de dose du rayonnement X.

Pour que le micro-ordinateur 16 puisse transmettre les différents ordres, par l'intermédiaire du module de commande 22, aux différents systèmes mécaniques, celui-ci doit avoir en mémoire, pour chaque pièce à traiter, la dose relative de rayonnement X ou e en fonction de la masse surfacique, la dose relative de rayonnement X fonction de la distance entre la pièce et la cible, la dose délivrée fonction de la vitesse de passage de la pièce, le profil extérieur de la pièce, l'évolution de la masse surfacique fonction des coordonnées de la pièce, les intervalles de calcul et la dose nécessaire à la polymérisation et/ou réticulation.

Cette automatisation est de nature à garantir une constance dans la production des pièces améliorant ainsi la qualité globale de ces pièces en matériau composite.

L'utilisation conjointe du bombardement électronique et de rayons X permet de polymériser et/ou réticuler des résines entrant dans la composition de pièces épaisses en matériau composite quelle que soit leur forme. Cette polymérisation et/ou réticulation se fait sans élévation de température ce qui permet d'obtenir des pièces en matériau composite d'excellente qualité exemptes des défauts induits par les procédés de l'art antérieur.

Ce procédé permet de diminuer les coûts du traitement des pièces car les temps du processus de polymérisation sont très courts. En effet, la polymérisation et/ou réticulation est inférieure à la seconde, en un point donné de la pièce, et l'énergie consommée est très faible ($\sim$10 kW).

Avec le procédé et le dispositif de l'invention, il a été réalisé des tubes en matériau composite présentant une longueur de 15 m, un diamètre intérieur de 442 mm, et un diamètre extérieur de 475 mm. Ces tubes sont composés d'une partie centrale de 13,4 m de long, constituée par des fibres de carbone liées entre elles par une résine époxy modifiée, telle que celle vendue sous le nom DIACRYL 103 de chez AKZO, et de deux embouts de raccordement de 0,8 m de longueur chacun, composés d'inserts métalliques en acier frettés par du matériau composite identique à celui de la partie centrale.

La masse surfacique du tube central étant de 2,5 g/cm$^2$, celle-ci a été traitée par un rayonnement électronique et les embouts dont la masse surfacique varie de 10,8 g/cm$^2$ à 2,5 g/cm$^2$ a été traitée par des rayons X et des électrons lorsque cette masse surfacique était inférieure à 4 g/cm$^2$. Le temps de polymérisation par rayons X de ce tube est de 1 heure 50 min et de 21 min pour l'irradiation par électrons, la puissance du faisceau d'électrons étant de 10 kW. La réalisation de ces mêmes tubes par le procédé "classique à chaud" par étuvage puis refroidissement nécessite un temps global de 70 heures.

## Revendications

1. Procédé industriel de polymérisation et/ou de réticulation d'une résine durcissable par rayonnements ionisants X ou e entrant dans la composition d'une pièce (2) de masse surfacique variable en matériau composite comprenant aussi au moins un insert de nature différente de la résine, caractérisé en ce que l'on envoie un faisceau d'électrons vers la pièce à traiter (2) afin de soumettre la résine dans les zones de la pièce présentant une masse surfacique au plus égale à 4 g/cm² à ce faisceau pour polymériser et /ou réticuler la résine et en ce que l'on interpose entre la pièce (2) et le faisceau d'électrons une cible (4) afin de soumettre la résine dans les zones de la pièce présentant une masse surfacique supérieure à 4 g/cm² à l'action d'un rayonnement X à des doses allant jusqu'à 10 Mrad suffisantes pour polymériser et/ou réticuler la résine, cette cible (4) étant apte à engendrer, sous l'action du faisceau d'électrons, le rayonnement X.

2. Procédé selon la revendication 1, caractérisé en ce que l'insert étant un produit radiodurcissable, on utilise des doses de rayonnement X supérieures à 10 Mrad pour réticuler ledit produit.

3. Procédé selon la revendication 1 ou 2, caractérisé en ce que le faisceau d'électrons présente une énergie au moins égale à 10 MeV et/ou une puissance au moins égale à 10 kW.

4. Procédé selon l'une quelconque des revendications 1 à 3, caractérisé en ce que la cible (4) est réalisée en un matériau métallique.

5. Procédé selon l'une quelconque des revendications 1 à 4, caractérisé en ce que la cible (4) est réalisée en un matériau présentant un numéro atomique au moins égal à 74.

6. Procédé selon l'une quelconque des revendications 1 à 5, caractérisé en ce que l'on réalise un mouvement relatif entre la pièce et l'un quelconque desdits rayonnements électronique ou X afin de soumettre tout ou partie de la pièce à l'un desdits rayonnements.

7. Procédé selon l'une quelconque des revendications 1 à 6, caractérisé en ce que le matériau composite contient des inserts métalliques.

8. Procédé selon l'une quelconque des revendications 1 à 7, caractérisé en ce que la résine est une résine à insaturation éthylénique

9. Dispositif pour polymériser et/ou réticuler. par un rayonnement ionisant une résine durcissable entrant dans la composition d'une pièce (2) de masse surfacique variable en matériau composite comprennant:

- des moyens (6) pour produire un faisceau d'électrons,
- des moyens (7) pour diriger le faisceau d'électrons vers la pièce, caractérisé par:
- une cible (4) apte à engendrer, sous l'action du faisceau d'électrons, un rayonnement X permettant d'obtenir des doses jusqu'à 10 Mrad, suffisantes pour polymériser et/ou réticuler la résine de ladite pièce (2),
- des moyens (8, 16) automatisés pour placer la cible entre la pièce et le faisceau d'électrons de façon que les zones de la pièce (2) présentant une masse surfacique au plus égale à 4 g/cm² soient soumises à l'action du faisceau d'électrons et que les zones de la pièce (2) présentant une masse surfacique supérieure à 4 g/cm² soient soumises à l'action du rayonnement X, et

- des moyens (16, 18, 19, 20, 22) pour effectuer un mouvement relatif entre l'un quelconque des rayonnements électronique ou X et la pièce afin que celle-ci soit soumise en partie ou en totalité à l'action de l'un desdits rayonnements.

10. Dispositif selon la revendication 9, caractérisé en ce qu'il comprend des moyens (16, 18, 19, 20, 22) permettant de faire défiler la pièce (2) devant l'un des rayonnements électronique ou X à une vitesse telle que la résine la constituant reçoive la dose de rayonnement nécessaire à sa polymérisation et/ou réticulation.

11. Dispositif selon la revendication 9 ou 10, caractérisé en ce qu'il comprend des moyens (16, 22, 24, 26, 28, 30) permettant de faire tourner la pièce (2) autour d'un axe perpendiculaire auxdits rayonnements électronique ou X.

12. Dispositif selon l'une quelconque des revendications 9 à 11, caractérisé en ce qu'il comprend des moyens (16, 22, 32) pour modifier la distance séparant la pièce (2) de la cible (4).

13. Dispositif selon l'une quelconque des revendications 9 à 12, caractérisé en ce que les moyens automatisés comportent un support de cible (8) escamotable en vue de placer ladite cible (4) en regard ou hors du faisceau d'électrons.

14. Dispositif selon la revendication 13, caractérisé en ce que les moyens automatisés comprennent des moyens (16) pour asservir le support (8) escamotable de façon que les zones de la pièce (2) présentant une masse surfacique au plus égale à 4 g/cm² soient soumises à l'action du faisceau d'électrons et que les zones de la pièce (2) présentant une masse surfacique supérieure à 4 g/cm² soient soumises à l'action du rayonnement X.

15. Dispositif selon la revendication 14, caractérisé en ce que les moyens d'asservissement comprennent un calculateur (16) dans lequel est mis en mémoire l'évolution de la masse surfacique de la pièce (2).

16. Dispositif selon l'une quelconque des revendications 9 à 15, caractérisé en ce que le faisceau d'électrons présente une énergie au moins égale à 10 MeV et/ou une puissance au moins égale à 10 kW.

**Patentansprüche**

1. Industrielles Verfahren zur Polymerisation und/oder Vernetzung eines Harzes, welches durch ionisierende Röntgen- oder Elektronen-Strahlung härtbar ist, welche in die Komposition eines Teils (2) mit veränderbarer Flächenbelegung aus einem zusammengesetzen Material eintritt, wobei das Teil auch wenigstens einen Einsatz mit gegenüber dem Harz unterschiedlicher Beschaffenheit umfaßt, dadurch gekennzeichnet, daß man einen Elektronenstrahl auf das zu behandelnde Teil (2) schickt, um das Harz in den Bereichen des Teils, welche eine Flächenbelebung von wenigstens gleich 4g/cm² aufweisen, diesem Strahl auszusetzen, um das Harz zu polymerisieren und/oder zu vernetzen, und daß man zwischen das Teil (2) und den Elektronenstrahl eine Auftreffplatte (4) anordnet, um das Harz in den Bereichen des Teils, die eine Flächenbelegung von mehr als 4g/cm² aufweisen, der Wirkung einer Röntgenbestrahlung mit einer Dosis bis zu 10 Mrad auszusetzen, die zur Polymerisation und/oder Vernetzung des Harzes ausreichend ist, wobei diese Auftreffplatte (4) durch Die Wirkung des Elektronenstrahls die Röntgenstrahlung erzeugen kann.

2. Verfahren nach Anspruch 1, dadurch gekennzeichnet, daß. wemm der Einsatz ein strahlungshärtbares Produkt ist, man eine Röntgenstrahlendosis von mehr als 10 Mrad verwendet, um dieses Produkt zu vernetzen.

3. Verfahren nach Anspruch 1 oder 2, dadurch gekennzeichnet, daß der Elektronenstrahl eine Energie von wenigstens gleich 10 MeV und/oder eine Leistung von wenigstens gleich 10 kW aufweist.

4. Verfahren nach irgendeinem der Ansprüche 1 bis 3, dadurch gekennzeichnet, daß die Auftreffplatte (4) aus einem Metallmaterial hergestellt ist.

5. Verfahren nach irgendeinem der Ansprüche 1 bis 4, dadurch gekennzeichnet, daß die Auftreffplatte (4) aus einem Material hergestellt ist, welches eine Atomzahl von wenigstens gleich 74 aufweist.

6. Verfahren nach irgendeinem der Ansprüche 1 bis 5, dadurch gekennzeichnet, daß man eine relative Bewegung zwischen dem Teil und irgendeinem der genannten Elektronen- oder Röntgenstrahlung herstellt, um das ganze Teil oder einen Abschnitt des Teils einer der genannten Strahlungen auszusetzen.

7. Verfahren nach irgendeinem der Ansprüche 1 bis 6, dadurch gekennzeichnet, daß das zusammengesetzte Material metallische Einsätze enthält.

8. Verfahren nach irgendeinem der Ansprüche 1 bis 7, dadurch gekennzeichnet, daß das Harz ein ungesättigtes Äthylenharz ist.

9. Vorrichtung zum Polymerisieren und/oder Vernetzen eines durch ionisierende Strahlung härtbaren Harzes, die in die Zusammensetzung eines Teils (2) mit veränderlicher Flächenbelebung aus einem zusammengesetzten Material eintritt, mit
- Mitteln (6), um einen Elektronenstrahl zu erzeugen,
- Mitteln (7), um den Elektronenstrahl auf das Teil zu richten, gekennzeichnet durch
- eine Auftrefplatte (4), die geeignet ist, unter der Wirkung des Elektronenstrahls eine Röntgenstrahlung zu erzeugen, mit der eine Dosis von bis zu 10 Mrad erhalten werden kann, die zur Polymerisation und/oder Vernetzung des Harzes des genannten Teils (2) ausreichend ist,
- automatisierte Mittel (8, 16), um die Auftreffplatte zwischen dem Teil und dem Elektronenstrahl derart anzuordnen, daß die Bereiche des Teils (2) mit einer Flächenbelegung von höchstens gleich 4g/cm² der Wirkung des Elektronenstrahls ausgesetzt sind, und daß die Bereiche des Teils (2), welche eine Flächenbelegung von mehr als 4g/cm² aufweisen, der Wirkung der Röntgenstrahlung ausgesetzt sind, und
- Mittel (16, 18, 19, 20, 22), um eine relative Bewegung zwischen irgendeiner der Elektronenstrahlung oder Röntgenstrahlung und dem Teil durchzuführen, damit dieses teilweise oder insgesamt der Wirkung einer der genannten Strahlungen ausgesetzt ist.

10. Vorrichtung nach Anspruch 9, dadurch gekennzeichnet, daß sie Mittel (16, 18, 19, 20, 22) umfaßt, die ermöglichen, das Teil (2) vor der Elektronenstrahlung oder Röntgenstrahlung mit einer solchen Geschwindigket vorbeizuführen, daß das es bildende Harz die für seine Polymerisation und/oder Vernetzung erforderliche Strahlungdosis erhält.

11. Vorrichtung nach Anspruch 9 oder 10, dadurch gekennzeichnet, daß sie Mittel (16, 22, 24, 26, 28, 30) umfaßt, die ermöglichen, das Teil (2) um eine zu der genannten Elektronen oder Röntgenstrahlung senkrechten Achse zu drehen.

12. Vorrichtung nach irgendeinem der Ansprüche 9 bis 11, dadurch gekennzeichnet, daß sie Mittel (16, 22, 32) umfaßt, um den das Teil (2) von der Auftreffplatte (4) trennenden Abstand zu verändern.

13. Vorrichtung nach irgendeinem der Ansprüche 9 bis 12, dadurch gekennzeichnet, daß die automatisierten Mittel eine einziehbare Halterung (8) für die Auftreffplatte umfassen, um die genannte Auftreffplatte (4) in Gegenüberlage des Elektronenstrahls oder außerhalb desselben anzuordnen.

14. Vorrichtung nach Anspruch 13, dadurch gekennzeichnet, daß die automatisierten Mittel Einrichtungen (16) umfassen, um die einziehbare Halterung (8) derart zu steuern, daß die Bereiche des Teils (2), welche eine Flächenbelegung von höchstens gleich 4g/cm² aufweisen, der Wirkung des Elektronenstrahls ausgesetzt sind, und daß die Bereiche des Teils (2), welche eine Flächenbelegung von mehr als 4g/cm² aufweisen, der Wirkung der Röntgenstrahlung ausgesetzt sind.

15. Vorrichtung nach Anspruch 14, dadurch gekennzeichnet, daß die Steuereinrichtungeneinen Rechner (16) umfassen, in dessen Speicher die Entwicklung der Flächenbelegung des Teils (2) eingeschrieben ist.

16. Vorrichtung nach irgendeinem der Ansprüche 9 bis 15, dadurch gekennzeichnet, daß der Elektronenstrahl eine Energie von wenigstens gleich 10 MeV und/oder eine Leistung von wenigstens gleich 10 kW aufweist.

## Claims

1. Industrial process for the polymerization and/or crosslinking of a resin hardenable by X or e⁻ ionizing rays entering into the composition of a part (2) with a variable surface mass and formed from a composite material, also incorporating at least one insert of a different nature compared with the resin, characterized in that an electron beam is supplied to the part (2) to be treated in order to subject the resin in areas of the part (2) having a surface mass at the most equal to $4g/cm^2$ to said electron beam in order to polymerize and/or crosslink the resin and that between the part and the electron beam is placed a target (4) in order to expose the resin in the areas of the part having a surface mass exceeding $4g/cm^2$ to the action of X-radiation at doses up to 10 Mrad adequate for polymerizing and/or crosslinking the resin, said target (4) being able to produce the X-radiation under the action of the electron beam.

2. Process according to claim 1, characterized in that as the insert is a radiohardening product, X-radiation doses higher than 10 Mrad are used for crosslinking said product.

3. Process according to claims 1 or 2, characterized in that the electron beam has an energy at least equal to 10 MeV and/or a power at least equal to 10 kW.

4. Process according to any one of the claims 1 to 3, characterized in that target (4) is made from a metallic material.

5. Process according to any one of the claims 1 to 4, characterized in that target (4) is made from a material having an atomic number at least equal to 74.

6. Process according to any one of the claims 1 to 5, characterized in that there is a/relative movement between the part and any random one of said X or electron radiations, in order to partly or wholly expose the part to one of said radiations.

7. Process according to any one of the claims 1 to 6, characterized in that the composite material contains metal inserts.

8. Process according to any one of the claims 1 to 7, characterized in that the resin is ethylenically unsaturated.

9. Apparatus for polymerizing and/or crosslinking by ionizing radiation a hardening resin entering into the composition of a part (2) with a variable surface mass and made from a composite material comprising means (6) for producing an electron beam and means (7) for directing the electron beam at the part characterized by a target (4) able to produce, under the action of the electron beam, X-radiation making it possible to obtain doses up to 10 Mrad adequate for polymerizing and/or crosslinking the resin of said part (2), automated means (8, 16) for placing the target between the part and the electron beam, in such a way that the areas of part (2) having a surface mass at the most equal to $4g/cm^2$ are exposed to the action of the electron beam and that the areas of the part (2) having a surface mass exceeding $4g/cm^2$ are exposed to the action of the X-radiation and means (16, 18, 19, 20, 22) for performing a relative movement between any one of the electron or X-radiations and the part, so that the latter is wholly or partly exposed to the action of one of said radiations.

10. Apparatus according to claim 9, characterized in that it comprises means (16, 18, 19, 20, 22) making it possible to move part (2) in front of one of the X or electron radiations at a speed such that the resin forming the same receives the radiation dose necessary for its polymerization and/or crosslinking.

11. Apparatus according to claims 9 or 10, characterized in that it comprises means (16, 20, 24, 26, 28, 30) making it possible to rotate part (2) about an axis perpendicular to said X or electron radiations.

12. Apparatus according to any one of the claims 9 to 11, characterized in that it comprises means (16, 22, 32) for modifying the distance separating part (2) and target (4).

13. Apparatus according to any one of the claims 9 to 12, characterized in that the automated means have a retractable target support (8) with a view to placing the target (4) in front of or out of the electron beam.

14. Apparatus according to claim 13, characterized in that the automated means comprise means (16) for servocontrolling the retractable support (8) in such a way that the areas of part (2) having a surface mass at the most equal to $4g/cm^2$ are exposed to the action of the electron beam and that the areas of part (2) having a surface mass exceeding $4g/cm^2$ are exposed to the action of the X-radiation.

15. Apparatus according to claim 14, characterized in that the servocontrol means comprise a computer (16), in which is stored the evolution of the surface mass of part (2).

16. Apparatus according to any one of the claims 9 to 15, characterized in that the electron beam has an energy at least equal to 10 MeV and/or a power at least equal to 10 kW.

FIG. 1

FIG. 2